# FASCICULE DE BREVET EUROPEEN

(11) **EP 0 297 945 B1**
(45) Date de publication et mention de la délivrance du brevet: **07.09.1994**
(21) Numéro de dépôt: 88401512.4
(22) Date de dépôt: 17.06.1988
(51) Int. Cl.: B29C 65/00, B29C 65/74

(54) **Procédé et dispositif pour fabriquer un paquet de tubes, applications et panneau comportant ce paquet**
Verfahren und Vorrichtung zum Herstellen eines Zellenverbundes aus Rohren, Anwendungen dieses Verbundes und damit aufgebaute Platte
Method and apparatus for making a multitubular assembly, applications of the assembly and panel constructed thereby

(30) Priorité: 19.06.1987 FR 8708622
(43) Date de publication de la demande: 04.01.1989
(73) Titulaire: POLYMERES MAINTENANCE, 51260 Bagneux (FR)
(72) Inventeur: POLYMERES MAINTENANCE, 51260 Bagneux (FR)

(56) Documents cités:
- BE-A- 670 027
- CH-A- 435 693
- DE-A- 2 129 813
- DE-A- 2 836 031
- DE-B- 1 209 725
- GB-A- 891 110
- GB-A- 2 059 802
- US-A- 1 465 653
- US-A- 3 234 639
- US-A- 3 625 102
- US-A- 3 664 906
- US-A- 4 276 249
- US-A- 4 351 680

## Description

L'invention concerne la fabrication d'un paquet ou nappe monobloc de tubes contigus latéralement, notamment en vue de constituer l'âme d'un panneau.

Une application typique, mais non limitative, de l'invention, est la réalisation de panneaux destinés à constituer des parois légères ayant une bonne résistance à la compression transversale, par exemple des parois de véhicules, de conteneurs et des cloisons diverses.

Pour l'application prévue selon la présente invention, on a déterminé que le paquet doit être constitué de tubes ni trop gros ni trop fins, de façon à constituer une résistance de paroi correcte et bien répartie, que le paquet doit pouvoir comporter un très grand nombre de tubes pour que la paroi ait l'étendue désirée, et que le paquet puisse être fabriqué économiquement à partir de tubes de grande longueur.

On connaît différentes techniques pour réaliser un paquet de tubes (publications DE-B-1 209 725, US-A-4 276 249, CH-A 435 693, US-A-3 234 639, GB-A-2 059 802, US-A-3 664 906, BE-A- 670 027, DE-A-2 836 031, US-A-1 465 653, US-A-3 792 562, US-A-4 155 800, US-A-3 792 562, US-A-4 155 800) mais les techniques connues ne conviennent pas pour réaliser le paquet de l'invention, soit parce qu'elles concernent des tubes d'un diamètre beaucoup trop gros ou beaucoup trop faible, soit parce que les procédés de fabrication sont trop onéreux pour permettre une fabrication économique, soit encore parce que les procédés de fabrication conduisent à un produit dans lequel les tubes sont fixés entre eux d'une manière indésirable.

Le brevet belge BE-A-0 670 027, notamment, décrit un procédé pour réaliser un panneau à partir d'une pluralité de tubes en sorte que ces tubes constituent un paquet monobloc de tubes contigus latéralement, dans lequel on place les tubes sur une surface ayant la forme désirée pour le panneau et on les colle les uns aux autres, les tubes ayant été enduits manuellement de colle avant d'être déposés, en sorte que la colle remplit les interstices entre les tubes et la couche de support.

Selon le procédé de l'invention, pour réaliser l'âme d'un panneau de cloison d'un véhicule ou d'un conteneur à partir d'une pluralité de tubes en sorte que ces tubes constituent un paquet monobloc de tubes contigus latéralement, on utilise des tubes ayant un diamètre extérieur de 5 à 12 mm et une épaisseur de paroi de 0,08 à 0,30 mm, on dispose les tubes dans une gouttière longitudinale où les tubes sont allongés parallèlement et tassés les uns contre les autres, on fait dépasser les tubes à une extrémité de la gouttière, on effectue une première coupe transversale de l'ensemble des tubes dans la région dépassante de la gouttière, on fixe entre eux les tubes à l'endroit de la coupe et on effectue une deuxième coupe transversale de l'ensemble des tubes à distance de la première coupe.

Dans une réalisation typique, après avoir fixé les tubes entre eux à l'endroit de la coupe, on fait avancer les tubes dans la gouttière puis on effectue la deuxième coupe.

L'invention permet de réaliser, à partir de tubes de grande longueur, par exemple des tubes ayant une longueur de l'ordre de 2 à 3 m et ayant un diamètre extérieur de quelques millimètres, des nappes ou paquets de tubes ayant une épaisseur de nappe ou de paquet de l'ordre de 20 à 30 mm, le paquet ou la nappe contenant plusieurs milliers de tronçons de tubes, par exemple de l'ordre de 10 000 à 30 000 tronçons de tubes.

Selon la présente invention, les tubes ont un diamètre de la gamme 5-12 mm et une épaisseur de paroi de 0,08 à 0,30 mm.

Selon d'autres caractéristiques de l'invention, le procédé de fabrication comporte une ou plusieurs des particularités suivantes :
- on fixe également les tubes entre eux à l'endroit de la deuxième coupe,
- on coupe transversalement le paquet entre l'endroit de la première coupe et l'endroit de la deuxième coupe pour obtenir deux paquets ou nappes dont les tubes ne sont fixés entre eux qu'à une seule extrémité, de tels paquets ou nappes de tubes présentant l'avantage de pouvoir être courbes facilement, par exemple pour constituer l'âme d'un panneau courbe,
- on réalise simultanément la coupe et la fixation des tubes entre eux à l'endroit de la coupe.

La présente invention concerne également un dispositif pour la mise en oeuvre du procédé de fabrication, ce dispositif comprenant une gouttière longitudinale apte à recevoir les tubes allongés les uns contre les autres, des moyens pour tasser les tubes dans la gouttière, des moyens pour pousser les tubes dans la gouttière en sorte qu'ils dépassent à une extrémité de la gouttière, des moyens de coupe pour couper les tubes transversalement dans l'extrémité dépassante et des moyens de fixation pour fixer entre elles les extrémités des tubes.

### Exemple de fabrication :

Réalisation de paquets ou nappes de structure tubulaire aux dimensions de
2 000 x 500 mm et épaisseur 25 mm (l'épaisseur est également la longueur des tubes). Ces nappes seront utilisés comme âmes de panneaux sandwich à semelles de composite verre-polyester.
a) - 18 000 tubes en polypropylène extrudé en diamètre extérieur de 8 mm, d'une épaisseur de 0,17 mm et d'une longueur de 2 100 mm sont nécessaires pour réaliser une section de 2 000 x 500 mm. Ces tubes sont introduits en longueur dans une gouttière de conformation à la section d'ouverture de 2 000 x 500 mm. Pendant l'introduction des tubes, cette section est maintenue plus grande pour éviter toute contrainte de glissement et permettre un bon tassement par la suite,
b) - du côté opposé à l'ouverture de la gouttière un plateau plan et mobile fait avancer le paquet de tubes jusqu'à un dépassement de 5 à 7 mm du plan de coupe,
c) - un fil de résistance chauffante monté sur un chariot à déplacement linéaire et parallèle au plan de l'ouverture, découpe en avançant ce paquet de tubes dans leur sens perpendiculaire. Pendant ce déplacement, le fil est en mouvement de va-et-vient vertical dans son axe d'une valeur de 20 à 30 mm,
   - cette coupe au fil chauffant des tubes en thermoplastique, comme le polypropylène, forme une collerette par fusion au bout de ces tubes. Autour de chaque tube, il y a six autres tubes au contact et ceci provoque pendant la coupe une interpénétration des collerettes et, en refroidissant, la soudure. Cette soudure au bout des tubes est assez forte pour assurer un blocage de la position et de la forme,
   - la première coupe d'un paquet de tubes dresse la face pour qu'elle serve comme référence,
d) - le plateau mobile pousse le paquet de tubes hors de la gouttière, sur une course de 25 mm,
e) - le fil chauffant découpe de nouveau de part en part le paquet de tubes en soudant également de ce côté tous les tubes entre eux,
   - un paquet ou une nappe de 2 000 x 500 mm en épaisseur de 25 mm est ainsi terminée,
f) - le paquet recouvert d'un voile de surface de 80 gr/m2 composé de fibres de verre et de fibres thermoplastiques, est placée à plat sur le plateau mobile d'une presse pneumatique à très faible course, 30 à 50 mm. Le plateau supérieur fixe est chauffant par circulation, à double circuit en contresens, d'une huile thermostable chauffée jusqu'à 260°C. En approchant le plateau chaud, les extrémités des tubes s'échauffent, deviennent fluides et pénètrent par la pression dans la structure du voile de surface. Dès que les deux plateaux sont approchés à 24,5 mm aux quatre angles, la presse s'ouvre très rapidement,
g) - dans un temps très court, le paquet est replacé dans une autre presse pneumatique et comprimée entre deux plateaux froids pour la conformer et la stabiliser. Le voile de surface est solidement soudé à la structure tubulaire et servira à la transmission des contraintes entre âme et semelle avec l'aide de la matrice en résine polyester,
h) - après refroidissement, les deux dernières opérations f) et g) sont refaites sur la deuxième face,
   - le paquet est prêt à recevoir des semelles en composite verre-polyester, sur un côté ou sur les deux.

On notera que dans le paquet ou nappe obtenu, les tubes ne sont fixés entre eux latéralement que dans la région d'une extrémité ou des deux extrémités, caractéristique très avantageuse pour faciliter l'absorption des chocs auxquels peut être soumise la surface du paquet.

Les semelles peuvent être de tout autre matière : tôle, contreplaqué, bois, complexe-thermoplastique, fibres, composites, etc...

La liaison peut être réalisée par surmoulage ou par collage à température ambiante ou à chaud.

Les dimensions et l'épaisseur des paquets ou nappes peuvent être très largement différentes, pratiquement sans limite. Il est même possible de réaliser des ouvertures en remplaçant des tubes par des formes en thermoplastique expansé plus léger et moins cher.

La matière des tubes peut être du métal, du papier, du thermoplastique, du thermodurcissable non chargé, chargé ou renforcé. Les dimensions peuvent être très différentes. Il est même possible de réaliser des nappes avec des tubes de plusieurs diamètres et épaisseurs différents dans le but de varier localement les caractéristiques mécaniques du panneau.

Comme indiqué ci-dessus, la section d'ouverture de la gouttière peut être très différente.

Le fil de coupe à résistance chauffante peut être remplacé par une scie à ruban. Au cas où les tubes sont en thermodurcissable, en papier ou en métal et coupés à la scie, la soudure en collerette n'est pas réalisée.

Lorsque les tubes du paquet sont coupés à la scie, la face coupée peut être recouverte par thermocollage soit d'un voile, d'un mât ou d'un tissu en fibre de verre ou tout autre matière conforme au besoin. Ce collage assure les mêmes fonctions que la soudure.

Dans une autre réalisation, on découpe le paquet transversalement au moyen d'un ruban de scie adéquat suivi immédiatement d'un élément chauffant très mince apte à émettre un rayonnement de chaleur contrôlé.

La course d'avance du paquet hors du tunnel peut être très différente, de quelques millimètres à plusieurs centimètres, selon l'épaisseur désirée pour la nappe de tubes.

Les figures du dessin joint illustrent l'invention :

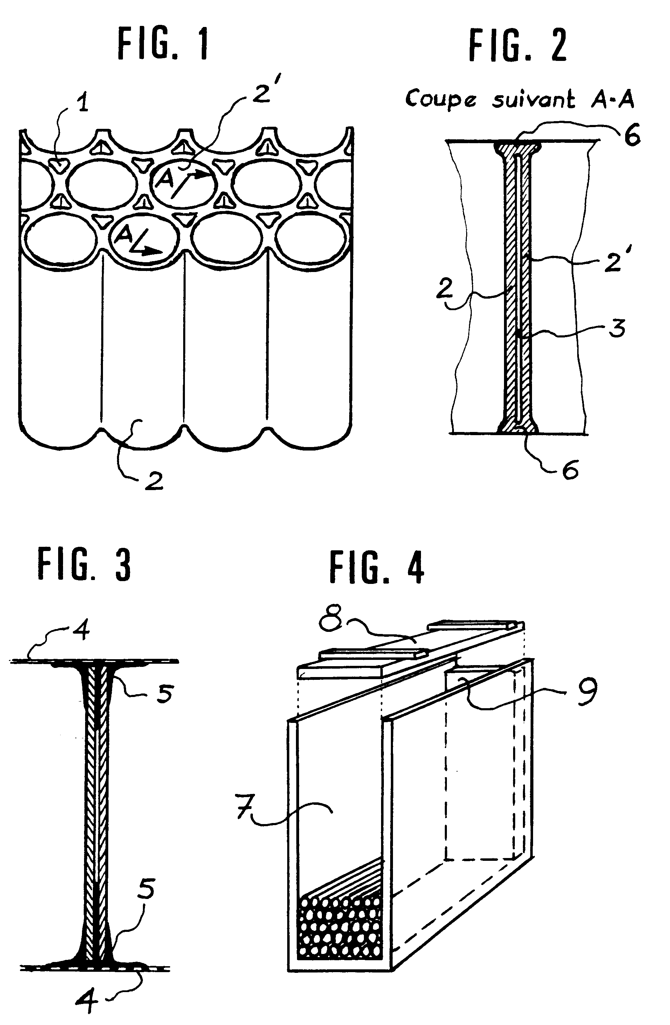

- la figure 1 est une vue d'une fraction d'un paquet de tubes thermofusibles réalisé conformément à l'invention : les extrémités des tubes ont été fondues ensemble constituant des collerettes soudées entre elles sauf aux endroits repérés en 1 sur la figure ;
- la figure 2 est une coupe suivant le plan a-A de la figure 1 ; on voit sur cette figure deux tubes dont les parois contiguës 2 et 2' forment aux extrémités des collerettes soudées entre elles par thermofusion.

On a représenté un intervalle 3 entre ces parois afin de rendre manifeste que ces parois ne sont soudées entre elles qu'aux extrémités 6 mais on comprendra qu'en fait les deux parois sont pratiquement au contact l'une de l'autre ;
- la figure 3 est une coupe analogue à celle de la figure 2 mais dans le cas où les tubes ne sont thermofusibles, la fixation étant obtenue par application d'un tissu 4 imprégné d'une colle qui s'est répandue aux extrémités des tubes dans des régions 5 représentées par des tâches noires sur la figure ;
- la figure 4 représente un dispositif utilisé pour réaliser le paquet de tubes, ce dispositif comprenant une gouttière 7, un couvercle 8 pour presser les tubes dans la gouttière afin de les maintenir en contact et un poussoir 9 pour pousser le paquet de tubes hors de la gouttière ;

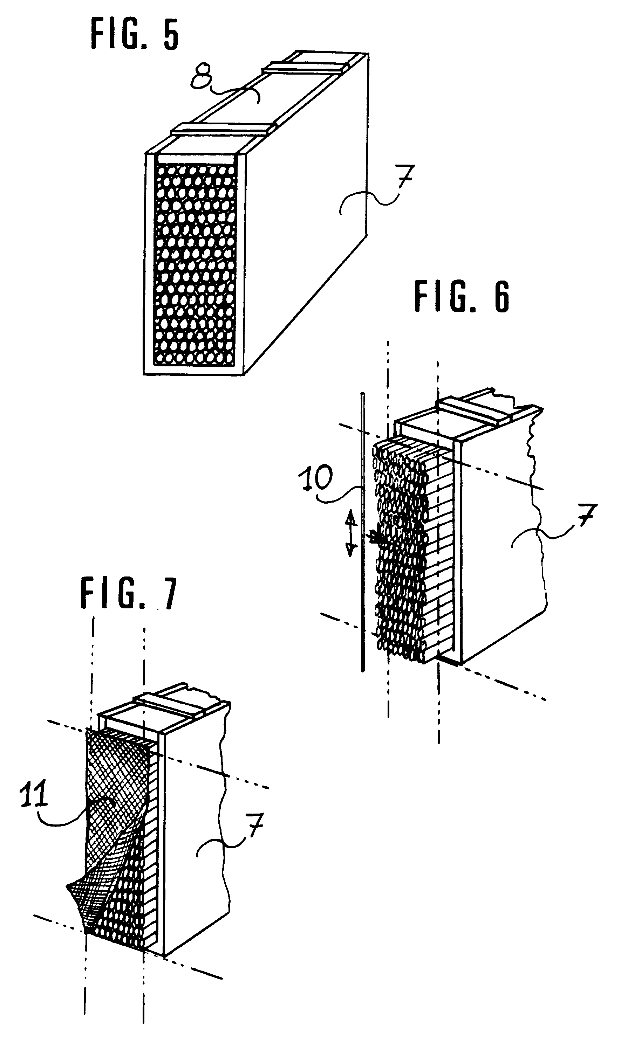

- la figure 5 montre le paquet de tubes dans la gouttière ;
- la figure 6 montre le paquet de tubes dont une extrémité a été poussée en saillie hors de la gouttière apte à être coupée suivant un plan représenté par des lignes de traits interrompues, le moyen de coupe étant constitué par un fil chauffant 10 ;
- la figure 7 montre le paquet de tubes dont une extrémité en saillie hors de la gouttière reçoit l'application d'un tissu 11 contenant une colle adéquate pour fixer entre elles les extrémités du tubes.

L'invention n'est pas limitée aux réalisations qui ont été décrites.

## Revendications

1. Procédé pour réaliser une âme d'un panneau de cloison d'un véhicule ou d'un conteneur à partir d'une pluralité de tubes en sorte que ces tubes constituent un paquet monobloc de tubes contigus latéralement, caractérisé en ce qu'on utilise des tubes (2,2') ayant un diamètre extérieur de 5 à 12 mm et une épaisseur de paroi de 0,08 à 0,30 mm, en ce qu'on dispose les tubes dans une gouttière longitudinale (7) où les tubes sont allongés parallèlement et tassés (8) les uns contre les autres, on fait dépasser les tubes à une extrémité de la gouttière, on effectue (10) une première coupe cransversale de l'ensemble des tubes dans la région dépassante de la gouttière, on fixe (10,11; 4,11) entre eux les tubes à l'endroit de la coupe et on effectue (10) une deuxième coupe transversale de l'ensemble des tubes à distance de la première coupe.

2. Procédé selon la revendication 1, caractérisé en ce qu'après avoir fixé les tubes (2,2') à l'endroit de la coupe, on fait avancer (9) les tubes dans la gouttière (7) avant d'effectuer la deuxième coupe.

3. Procédé selon la revendication 1 ou 2, caractérisé en ce qu'on fixe également les tubes (2,2') entre eux a l'endroit de la deuxième coupe.

4. Procédé selon la revendication 3, caractérisé en ce qu'on coupe transversalement le paquet entre l'endroit de la première coupe et l'endroit de la deuxième coupe pour obtenir deux paquets dont les tubes (2,2') ne sont fixés entre eux qu'à une extrémité.

5. Procédé selon l'une des revendications précédentes, caractérisé en ce qu'on réalise simultanément la coupe et la fixation des tubes (2,2') entre eux à l'endroit de la coupe.

6. Procédé selon la revendication 5, caractérisé en ce qu'on utilise des tubes en matériau thermofusible et en ce qu'on réalise la coupe et la fixation au moyen d'un fil chauffant apte à provoquer un début de fusion des tubes (2,2') à l'endroit de la coupe avec interpénétration des collerettes (6) des tubes ainsi obtenues.

7. Procédé selon l'une des revendications précédentes caractérisé en ce qu'on utilise des tubes en matériau thermofusible et en ce qu'on applique en chauffant et avec pression une nappe (4,11) sur les tubes (2,2') à l'endroit de la coupe, en chauffant de façon que les collerettes (6) des tubes deviennent fluides et pénètrent dans la structure de la nappe puis en refroidissant pour stabiliser la matière.

8. Procédé selon l'une des revendications 1 à 4, caractérisé en ce que pour fixer entre eux les tubes à l'endroit d'une coupe, on applique sur les tubes après la coupe, un tissu (4,11) contenant une colle apte à fixer entre elles les extrémités des tubes.

9. Procédé selon la revendication 8, caractérisé en ce qu'on réalise la fixation en appliquant une nappe (4,11) contenant une colle thermofusible que l'on chauffe pour activer la colle.

10. Procédé selon l'une des revendications 1 à 6, caractérisé en ce qu'on applique et on fixe sur l'extrémité du paquet où les tubes sont fixés entre eux un tissu ou autre nappe ultérieure qui renforce la tenue du paquet et qui peut servir de support pour la fixation d'une paroi de revêtement.

11. Dispositif pour la mise en oeuvre d'un procédé selon l'une des revendications 1 à 10, qui comprend une gouttière longitudinale (7) apte à recevoir lesdits tubes (2,2') allongés parallèlement les uns contre les autres, des moyens (8) pour tasser les tubes dans la gouttière, des moyens (9) pour pousser les tubes dans la gouttière en sorte qu'ils dépassent à une extrémité de la gouttière, des moyens de coupe (10) pour couper les tubes transversalement dans leur extrémité dépassante et des moyens de fixation (10,11) pour fixer entre elles les extrémités des tubes.

12. Dispositif selon la revendication 11, caractérisé en ce que les moyens de coupe et les moyens de fixation sont constitués par un même outil (10).

13. Dispositif selon la revendication 12, caractérisé en ce que les tubes sont en matériau thermofusible et l'outil de coupe (10) est un fil chauffant, de façon connue en soi.

14. Dispositif selon la revendication 11 ou 12, caractérisé en ce que le moyen de fixation est une nappe (4,11) contenant une colle thermofusible.

15. Dispositif selon la revendication 11, caractérisé en ce que les moyens de coupe et de fixation comprennent un rayon laser et un feuillard d'acier rendu antiadhérent.

## Claims

1. Process for producing a core of a partition panel of a vehicle or of a container from a plurality of tubes such that these tubes form a one-piece pack of laterally adjacent tubes, characterized in that tubes (2, 2') having an external diameter of 5 to 12 mm and a wall thickness of 0.08 to 0.30 mm are used, in that the tubes are arranged in a longitudinal channel (7) where the tubes are laid parallel and packed (8) against one another, the tubes are made to project at one end of the channel, a first transverse cut of the assembly of tubes is effected (10) in the region projecting from the channel, the tubes are mutually secured (10, 11; 4, 11) at the location of the cut and a second transverse cut of the assembly of tubes is effected (10) at a spacing from the first cut.

2. Process according to Claim 1, characterized in that after having secured the tubes (2, 2') at the location of the cut, the tubes are advanced (9) in the channel (7) before effecting the second cut.

3. Process according to Claim 1 or 2, characterized in that the tubes (2, 2') are also secured to one another at the location of the second cut.

4. Process according to Claim 3, characterized in that the pack is cut transversely between the location of the first cut and the location of the second cut to obtain two packs whereof the tubes (2, 2') are only mutually secured at one end.

5. Process according to one of the preceding claims, characterized in that cutting and mutual securing of the tubes (2, 2') at the location of the cut are carried out simultaneously.

6. Process according to Claim 5, characterized in that tubes of a hot-melt material are used, and in that cutting and securing are carried out by means of a heating wire which is suitable for bringing about a start in fusion of the tubes (2, 2') at the location of the cut with interpenetration of the collars (6) of the tubes thus obtained.

7. Process according to one of the preceding claims, characterized in that tubes of a hot-melt material are used, and in that a sheet (4, 11) is applied by heating and with pressure onto the tubes (2, 2') at the location of the cut, heating such that the collars (6) of the tubes become fluid and penetrate into the structure of the sheet, then cooling in order to stabilize the material.

8. Process according to one of claims 1 to 4, characterized in that to mutually secure the tubes at the location of a cut, a fabric (4, 11) containing an adhesive which is suitable for mutually securing the ends of the tubes is applied onto the tubes after cutting.

9. Process according to Claim 8, characterized in that securing is carried out by applying a sheet (4, 11) containing a hot-melt adhesive which is heated in order to activate the adhesive.

10. Process according to one of claims 1 to 6, characterized in that a fabric or another subsequent sheet which reinforces the holding of the pack and which can serve as a support for securing a cladding wall is applied and secured onto the end of the pack where the tubes are secured to one another.

11. Device for implementing a process according to one of claims 1 to 10, which comprises a longitudinal channel (7) which is suitable for receiving the said tubes (2, 2') which are laid parallel against one another, means (8) for packing the tubes in the channel, means (9) for pushing the tubes in the channel such that they project at one end of the channel, cutting means (10) for cutting the tubes transversely at their projecting ends and securing means (10, 11) for mutually securing the ends of the tubes.

12. Device according to claim 11, characterized in that the cutting means and the securing means are formed by the same tool (10).

13. Device according to Claim 12, characterized in that the tubes are of hot-melt material and the cutting tool (10) is a heating wire, in a manner known per se.

14. Device according to Claim 11 or 12, characterized in that the securing means is a sheet (4, 11) containing a hot-melt adhesive.

15. Device according to Claim 11, characterized in that the cutting and securing means comprise a laser beam and a steel strip which has been made antiadhesive.

## Patentansprüche

1. Verfahren zur Herstellung eines Kerns einer Wandplatte eines Fahrzeugs oder eines Containers aus einer Vielzahl von Rohren, derart, daß diese Rohre ein Einblock-Paket aus seitlich aneinandergrenzenden Rohren bilden,
**dadurch gekennzeichnet**,
daß man Rohre, (2, 2') verwendet, die einen Außendurchmesser von 5 bis 12 mm haben und eine Dicke von 0,08 bis 0,30 mm, dadurch, daß man die Rohre in einer Längsrinne (7) anordnet, wo die Rohre parallel ausgestreckt liegen und fest gegeneinandergedrückt werden (8), daß man die Rohre an einem Ende der Rinne vorstehen läßt, man (10) ein erstes Querschneiden der Gesamtheit der Rohre in dem Bereich durchführt, der aus der Rinne vorsteht, man (10, 11; 4, 11) die Rohre aneinander befestigt in dem Bereich des Schnitts und man (10) ein zweites Querschneiden der Gesamtheit der Rohre mit einem Abstand vom ersten Schnitt durchführt.

2. Verfahren nach Anspruch 1, dadurch gekennzeichnet, daß, nachdem man die Rohre (2, 2') an der Schnittstelle aneinander befestigt hat, man die Rohre in der Rinne (7) verschiebt (9), bevor man den zweiten Schnitt durchführt.

3. Verfahren nach Anspruch 1 oder 2, dadurch gekennzeichnet, daß man die Rohre (2, 2') ebenfalls an der zweiten Schnittstelle aneinander befestigt.

4. Verfahren nach Anspruch 3, dadurch gekennzeichnet, daß man das Paket zwischen der ersten Schnittstelle und der zweiten Schnittstelle quer durchschneidet, um zwei Pakete zu erhalten, deren Rohre (2, 2') nur an einem Ende aneinander befestigt sind.

5. Verfahren nach einem der vorhergehenden Ansprüche, dadurch gekennzeichnet, daß man den Schnitt und das Befestigen der Rohre (2, 2') aneinander an der Schnittstelle simultan durchführt.

6. Verfahren nach Anspruch 5, dadurch gekennzeichnet, daß man Rohre aus wärmeschmelzbarem Material verwendet und dadurch, daß man den Schnitt und die Befestigung mittels eines Glühdrahts bzw. Heizfadens durchführt, der imstande ist, einen Schmelzbeginn der Rohre (2, 2') an der Schnittstelle zu bewirken mit gegenseitiger Durchdringung der dadurch entstandenen Krägen (6).

7. Verfahren nach einem der vorhergehenden Ansprüche, dadurch gekennzeichnet, daß man Rohre aus wärmeschmelzbarem Material verwendet und dadurch, daß man, durch Erwärmung und mit Druck, an der Schnittstelle auf den Rohren (2, 2') ein Vlies anbringt, indem man so erwärmt, daß die Krägen (6) flüssig werden und in die Struktur des Vlieses eindringen, dann indem man kühlt, um das Material zu stabilisieren.

8. Verfahren nach einem der Ansprüche 1 bis 4, dadurch gekennzeichnet, daß man, um die Rohre an der Schnittstelle aneinander zu befestigen, auf den Rohren nach dem Schneiden ein Gewebe (4, 11) anbringt, das ein Klebemittel enthält, das imstande ist die Enden der Rohre aneinander zu befestigen.

9. Verfahren nach Anspruch 8, dadurch gekennzeichnet, daß man die Befestigung durchführt, indem man ein ein wärmeschmelzbares Klebemittel enthaltendes Vlies (4, 11) aufbringt, das man erwärmt, um das Klebemittel zu aktivieren.

10. Verfahren nach einem der Ansprüche 1 bis 6, dadurch gekennzeichnet, daß man am Ende des Pakets, wo die Rohre aneinander befestigt sind, ein Gewebe oder weiteres anderes Vlies aufbringt und befestigt, das den Zusammenhalt des Pakets verstärkt und das als Träger dienen kann für eine Aus- bzw. Verkleidungswand.

11. Vorrichtung für die Durchführung eines Verfahrens nach einem der Ansprüche 1 bis 10, umfassend eine Längsrinne (7), geeignet die genannten, parallel zueinander ausgestreckten Rohre (2,2') aufzunehmen, Einrichtungen (8), um die die Rohre in der Rinne gegeneinanderzudrücken, Einrichtungen (9), um die Rohre in der Rinne zu verschieben, so daß sie an einem Ende der Rinne vorstehen, Schneideinrichtungen (10), um die Rohre an ihrem vorstehenden Ende quer durchzuschneiden, und Befestigungseinrichtungen (10, 11), um die Enden der Rohre aneinander zu befestigen.

12. Vorrichtung nach Anspruch 11, dadurch gekennzeichnet, daß die Schneideinrichtungen und die Befestigungseinrichtungen durch dasselbe Gerät (10) gebildet werden.

13. Vorrichtung nach Anspruch 12, dadurch gekennzeichnet, daß die Rohre aus einem wärmeschmelzbaren Material sind und das Schneidgerät ein Glüh- bzw. Heizdraht ist, von an sich bekannter Art.

14. Vorrichtung nach Anspruch 11 oder 12, dadurch gekennzeichnet, daß das Befestigungsmittel ein Vlies (4, 11) ist, das einen wärmeschmelzbaren Klebstoff enthält.

15. Vorrichtung nach Anspruch 11, dadurch gekennzeichnet, daß die Schneid- und Befestigungseinrichtungen einen Laserstrahl und ein nichthaftendgemachtes Stahlband umfassen.
